# EUROPEAN PATENT APPLICATION

(11) **EP 4 024 652 A1**
(43) Date of publication of application: **06.07.2022**
(21) Application number: 20868885.3
(22) Date of filing: 24.09.2020
(51) Int. Cl.: H02J 7/00

(54) **VARIABLE STEP SIZE EQUALIZATION PROCESSING METHOD, AND DEVICE, MEDIUM, BATTERY PACKAGE, AND VEHICLE**

(30) Priority: 25.09.2019 CN 201910912716
(71) Applicant: BYD Company Limited, Shenzhen, Guangdong 518118 (CN)
(72) Inventor: FENG, Tianyu, Shenzhen, Guangdong 518118 (CN); DENG, Linwang, Shenzhen, Guangdong 518118 (CN); LIU, Sijia, Shenzhen, Guangdong 518118 (CN); LI, Xiaoqian, Shenzhen, Guangdong 518118 (CN); KANG, Bin, Shenzhen, Guangdong 518118 (CN)
(74) Representative: Hoffmann Eitle
(86) International application number: PCT/CN2020/117324
(87) International publication number: WO 2021/057833

(57) **Abstract**

A step-varying equalization method, a device, a medium, a battery pack, and a vehicle are provided. The method includes: initiating coarse-tuning equalization for a cell in the series-connected battery when an initial equalization difference of the cell reaches a preset coarse-tuning requirement; determining a first state of charge (SOC) equalization difference according to a first voltage value of the cell after completion of the coarse-tuning equalization when a first real equalization difference of the cell after the coarse-tuning equalization reaches a preset fine-tuning requirement, and initiating fine-tuning equalization for the cell with a first equalization step size based on the first SOC equalization difference; and determining that SOC equalization of the cell is completed when a second real equalization difference of the cell after completion of the fine-tuning equalization is less than or equal to a target equalization value.

## Description

### CROSS-REFERENCE TO RELATED APPLICATIONS

The present disclosure claims priority of Chinese Patent Application No. 201910912716.1, filed on September 25, 2019, and entitled "VARIABLE STEP SIZE EQUALIZATION PROCESSING METHOD, AND DEVICE, MEDIUM, BATTERY PACK, AND VEHICLE." The entire content of the present disclosure is incorporated herein by reference.

### FIELD

The present disclosure relates to the technical field of equalization of a series-connected battery, and in particular, to a step-varying equalization method, a device, a medium, a battery pack, and a vehicle.

### BACKGROUND

Since cells in a series-connected battery have different self-discharging rate and different degrees of aging, during use of the series-connected battery, the cells have different remaining capacities, resulting in misalignment of the remaining capacities of the cells. As a result, an available capacity of the series-connected battery decreases. Therefore, a state of charge (SOC) of each cell is required to be adjusted. That is to say, each cell is equalized.

In the related art, during the equalization of the cells in the series-connected battery, an equalization difference is usually calculated according to one of a voltage and an SOC value, and then it is determined whether to initiate the equalization, and each equalization amount is a fixed value.

The above solution has the following shortcomings. When the equalization amount is a relatively large fixed value, problems such as repeated equalization, a low equalization efficiency, and a poor equalization precision occur. When the equalization amount is a relatively small fixed value, problems such as a large number of full-charging times, a longer equalization duration, and a small equalization speed occur. That is to say, when a single equalization amount is a fixed value, the equalization precision requirement and the equalization speed requirement cannot be simultaneously satisfied. In addition, calculating the equalization difference based on one of the voltage and the SOC value alone further reduce the equalization precision.

### SUMMARY

Embodiments of the present disclosure provide a step-varying equalization method, a device, a medium, a battery pack, and a vehicle. During the equalization of a cell in a series-connected battery, coarse-tuning equalization and fine-tuning equalization are combined. In this way, an equalization target can be quickly and accurately achieved, and an equalization precision and an equalization speed can be improved. In addition, the present disclosure is applicable to a wider range.

A first aspect of the embodiments of the present disclosure provides a step-varying equalization method for a series-connected battery. The method includes:
initiating coarse-tuning equalization for a cell in the series-connected battery when an initial equalization difference of the cell reaches a preset coarse-tuning requirement, where the initial equalization difference is determined according to a first state of charge (SOC) value of each cell in the series-connected battery;
determining a first SOC equalization difference according to a first voltage value of the cell after completion of the coarse-tuning equalization when a first real equalization difference of the cell after the completion of the coarse-tuning equalization reaches a preset fine-tuning requirement, and initiating fine-tuning equalization for the cell with a first equalization step size based on the first SOC equalization difference, where the first equalization step size is less than the first SOC equalization difference; and
determining that SOC equalization of the cell is completed when a second real equalization difference of the cell after completion of the fine-tuning equalization is less than or equal to a target equalization value.

A second aspect of the embodiments of the present disclosure provides a computer device. The computer device includes a memory, a processor, and computer-readable instructions stored in the memory and executable on the processor. When executing the computer-readable instructions, the step-varying equalization method for a series-connected battery is performed.

A third aspect of the embodiments of the present disclosure provides a computer-readable storage medium. The computer-readable storage medium stores computer-readable instructions. When the computer-readable instructions are executed by the processor, the step-varying equalization method for a series-connected battery is performed.

A fourth aspect of the embodiments of the present disclosure provides a battery pack. The battery pack includes a series-connected battery. SOC equalization of the cell in the series-connected battery is performed by using the step-varying equalization method for a series-connected battery.

A fifth aspect of the embodiments of the present disclosure provides a vehicle. The vehicle includes a series-connected battery and a control module communicatively connected to the series-connected battery. The control module is configured to perform the step-varying equalization method for a series-connected battery.

According to the step-varying equalization method, the device, the medium, the battery pack, and the vehicle provided in the embodiments of the present disclosure, during the equalization of the cell in the series-connected battery, coarse-tuning equalization (including determining the initial equalization difference according to the first SOC value of each cell in the series-connected battery, determining whether the preset coarse-tuning requirement is reached according to the initial equalization difference, and initiating coarse-tuning equalization) and fine-tuning equalization (including determining the first SOC equalization difference according to the first voltage value of the cell after completion of the coarse-tuning equalization when the first real equalization difference of the cell after completion of the coarse-tuning equalization reaches the preset fine-tuning requirement, and initiating fine-tuning equalization for the cell with the first equalization step size based on the first SOC equalization difference) is combined. In this way, the equalization target can be quickly and accurately achieved, and the equalization precision and the equalization speed can be improved. In addition, the present disclosure is applicable to a wider range.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and a person of ordinary skill in the art can still derive other drawings from these accompanying drawings without creative efforts.
FIG. 1 is a flowchart of a step-varying equalization method for a series-connected battery according to an embodiment of the present disclosure.
FIG. 2 is a flowchart of step S10 in the step-varying equalization method for a series-connected battery according to an embodiment of the present disclosure.
FIG. 3 is a flowchart of step S20 in the step-varying equalization method for a series-connected battery according to an embodiment of the present disclosure.
FIG. 4 is a schematic diagram of a voltage curve of each cell in a series-connected battery before (state of charge) SOC equalization according to an embodiment of the present disclosure.
FIG. 5 is a schematic diagram of a voltage curve of each cell in the series-connected battery after completion of the SOC equalization according to an embodiment of the present disclosure.
FIG. 6 is a schematic structural diagram of a computer device according to an embodiment of the present disclosure.
FIG. 7 is a schematic structural diagram of a computer device according to another embodiment of the present disclosure.
FIG. 8 is a schematic structural diagram of a computer-readable storage medium according to an embodiment of the present disclosure.
FIG. 9 is a schematic structural diagram of a battery pack according to an embodiment of the present disclosure.
FIG. 10 is a schematic structural diagram of a vehicle according to an embodiment of the present disclosure.

### DETAILED DESCRIPTION

The following clearly and completely describes the technical solutions in the embodiments of the present disclosure with reference to the accompanying drawings in the embodiments of the present disclosure. Apparently, the described embodiments are merely some of the embodiments of the present disclosure rather than all of the embodiments. All other embodiments obtained by a person of ordinary skill in the art based on the embodiments of the present disclosure without creative efforts shall fall within the protection scope of the present disclosure.

A step-varying equalization method for a series-connected battery provided in the present disclosure is applicable to an application environment where a client (a computer device) communicates with a server by using a network. The client (the computer device) includes, but is not limited to various personal computers, laptops, smart phones, tablets, cameras, and portable wearable devices. The server may be implemented by using an independent server or a server cluster formed by a plurality of servers.

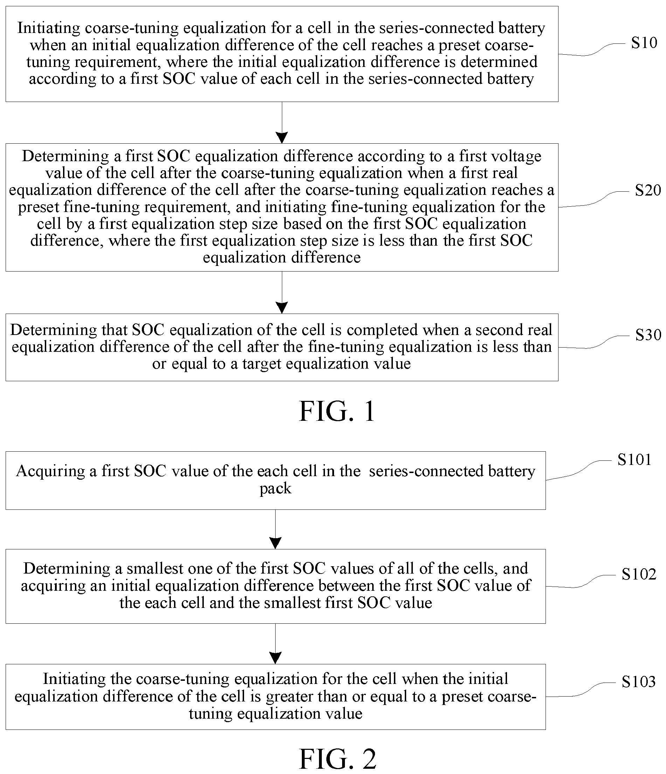

In an embodiment, as shown in FIG. 1, a step-varying equalization method for a series-connected battery is provided. The method includes the following steps S10-S30.

S10: Initiating coarse-tuning equalization for a cell in the series-connected battery when an initial equalization difference of the cell reaches a preset coarse-tuning requirement.

The initial equalization difference is determined according to a first state of charge (SOC) value of each cell in the series-connected battery. The first SOC value is an SOC value corresponding to each cell in the current series-connected battery. The first SOC value may be directly obtained by a battery management system (BMS). It may be understood that, assuming that the series-connected battery includes N (N is a positive integer) cells, the N cells correspond to N first SOC values. A smallest one (which may be referred to as a smallest first SOC value) of the N first SOC values corresponding to the N cell is first determined. Then the initial equalization difference is a difference between the first SOC value of one of the cells and the smallest first SOC value. When the initial equalization difference reaches a preset coarse-tuning requirement (the preset coarse-tuning requirement may be the initial equalization difference being greater than or equal to a preset coarse-tuning equalization value), coarse-tuning equalization is performed on the cell in the series-connected battery.

It may be understood that, calculating the initial equalization difference based on the first SOC value of the cell and initiating the equalization according to the initial equalization difference is applicable to a full SOC range. In the process, a precision of the equalization is correlated with a precision of an SOC algorithm. Therefore, the error is relatively large. The coarse-tuning equalization is applicable to a case that the equalization difference is relatively large (the initial equalization difference is greater than or equal to the preset coarse-tuning equalization value). In addition, the process can be performed without a need to wait for full charge or other specific working conditions. Therefore, the process is applicable to a wide range.

S20: Determining a first SOC equalization difference according to a first voltage value of the cell after the coarse-tuning equalization is completed when a first real equalization difference of the cell after the coarse-tuning equalization is completed reaches a preset fine-tuning requirement, and initiating fine-tuning equalization for the cell with a first equalization step size based on the first SOC equalization difference. The first equalization step size is less than the first SOC equalization difference.

After the coarse-tuning equalization is completed, the first real equalization difference of the cell is an SOC precision of the cell. In this case, it may be determined whether the first real equalization difference of the cell reaches the preset fine-tuning requirement, and when the first real equalization difference of the cell reaches the preset fine-tuning requirement, the first SOC equalization difference is determined according to a current first voltage value (the first voltage value is a first voltage value of the cell in a preset state, and the preset state may be a voltage value when the cell is fully charged, empty, or at a specific voltage) of the cell. Thereafter, before performing the fine-tuning equalization, a first equalization step size (the first equalization step size of the fine-tuning equalization is required to be less than or equal to the first SOC equalization difference) is selected from a preset equalization step size list (the equalization step size list lists a plurality of possible equalization step sizes) according to the first SOC equalization difference, and then the fine-tuning equalization is performed according to the selected first equalization step size.

During the fine-tuning equalization, the fine-tuning equalization is initiated according to the first voltage value of the cell, and the equalization precision is correlated with a voltage sampling precision and an open circuit voltage (OCV) curve characteristic of the cell. Therefore, the equalization precision is high and the error is small. The fine-tuning equalization is adapted to be performed in a case that the equalization difference is relatively small. It may be understood that, in some embodiments, the first real equalization difference is equal to the first SOC equalization difference.

It may be understood that, if it is determined that the first real equalization difference of the cell does not reach the preset fine-tuning requirement, that is to say, the SOC precision of the cell fails to satisfy the preset fine-tuning requirement (the first real equalization difference is always greater than the preset coarse-tuning equalization value), it indicates that the fine-tuning requirement is excessively high for the cell, and the fine-tuning requirement is required to be adjusted. For example, the preset coarse-tuning equalization value is increased, so that the fine-tuning equalization process can be performed smoothly.

S30: Determining that SOC equalization of the cell is completed when a second real equalization difference of the cell after the fine-tuning equalization is completed is less than or equal to a target equalization value.

That is to say, after the fine-tuning equalization, the second real equalization difference is equal to a difference between the first SOC equalization difference and the first equalization step size. When the second real equalization difference of the cell is less than or equal to the target equalization value, it means that the SOC equalization of the cell is completed. When the second real equalization difference of the cell is still greater than the target equalization value, it means that the SOC equalization is not completed, and the fine-tuning equalization is required to be performed for a second time (or more times), until a final obtained real equalization difference of the cell is less than or equal to the target equalization value.

According to the step-varying equalization method for a series-connected battery in the above embodiment, during the equalization of the cell in the series-connected battery, coarse-tuning equalization (including determining the initial equalization difference according to the first SOC value of each cell in the series-connected battery, determining whether the preset coarse-tuning requirement is reached according to the initial equalization difference, and initiating coarse-tuning equalization) and fine-tuning equalization (including determining the first SOC equalization difference according to the first voltage value of the cell after the coarse-tuning equalization is completed when the first real equalization difference of the cell after the coarse-tuning equalization is completed reaches the preset fine-tuning requirement, and initiating fine-tuning equalization for the cell with the first equalization step size based on the first SOC equalization difference) is combined. In this way, the equalization target can be quickly and accurately achieved, a number of charging days can be reduced (the required number of fine-tuning equalization in a specific working condition is relatively low, which means fewer required equalization days, less reliance on charging and usage habits of users, and faster achievement of the equalization target during the equalization), and the equalization precision and the equalization speed can be improved. In addition, the present disclosure is applicable to a wider range.

In an embodiment, as shown in FIG. 2, step S10 of initiating coarse-tuning equalization for the cell in the series-connected battery when the initial equalization difference of the cell reaches the preset coarse-tuning requirement includes the following steps.

S101: Acquiring a first SOC value of each cell in the series-connected battery.

The first SOC value is an SOC value corresponding to each cell in the current series-connected battery. The first SOC value is stored in the BMS. Therefore, the first SOC value may be directly acquired from the BMS.

S102: Determining a smallest one of the first SOC values of all of the cells in the series-connected battery, and acquiring an initial equalization difference of each cell between the first SOC value of the cell and the smallest first SOC value.

It may be understood that, assuming that the series-connected battery includes N (N is a positive integer) cells, the N cells correspond to N first SOC values. A smallest one (that is, a smallest first SOC value) of the N first SOC values corresponding to the N cell is first determined. The initial equalization difference of one of the cells is a difference between the first SOC value of the cell and the smallest first SOC value.

S103: Initiating the coarse-tuning equalization for the cell when the initial equalization difference of the cell is greater than or equal to the preset coarse-tuning equalization value.

In this embodiment, the initial equalization difference is determined according to the SOC value of each cell in the series-connected battery. When the initial equalization difference reaches the preset coarse-tuning requirement (the preset coarse-tuning requirement may be the initial equalization difference being greater than or equal to the preset coarse-tuning equalization value, where the preset coarse-tuning equalization value may be set and modified as required), coarse-tuning equalization is performed on the cell in the series-connected battery.

It may be understood that, a precision of the coarse-tuning equalization is correlated with the precision of the SOC algorithm. Therefore, the error is relatively large. In a case that the target equalization value is less than the SOC precision of the cell, the target equalization value cannot be achieved merely by coarse-tuning equalization (the final first real equalization difference after completion of the coarse-tuning equalization is the SOC precision, and the SOC precision of each cell is prestored in the BMS, and therefore, the first real equalization difference after completion of the coarse-tuning equalization can be learned by directly querying the BMS for the SOC precision of the cell). However, since the coarse-tuning equalization can be used in the full SOC range without waiting for full charge or other specific operating conditions, so the coarse-tuning equalization has wide applicability (the coarse-tuning equalization can be performed at any time and shall not be affected by operating conditions). Therefore, calculating the initial equalization difference based on the first SOC value of the cell and initiating the equalization according to the initial equalization difference is applicable to the full SOC range. The coarse-tuning equalization is adapted to be performed in a case that the equalization difference is relatively large (the initial equalization difference is greater than or equal to the preset coarse-tuning equalization value).

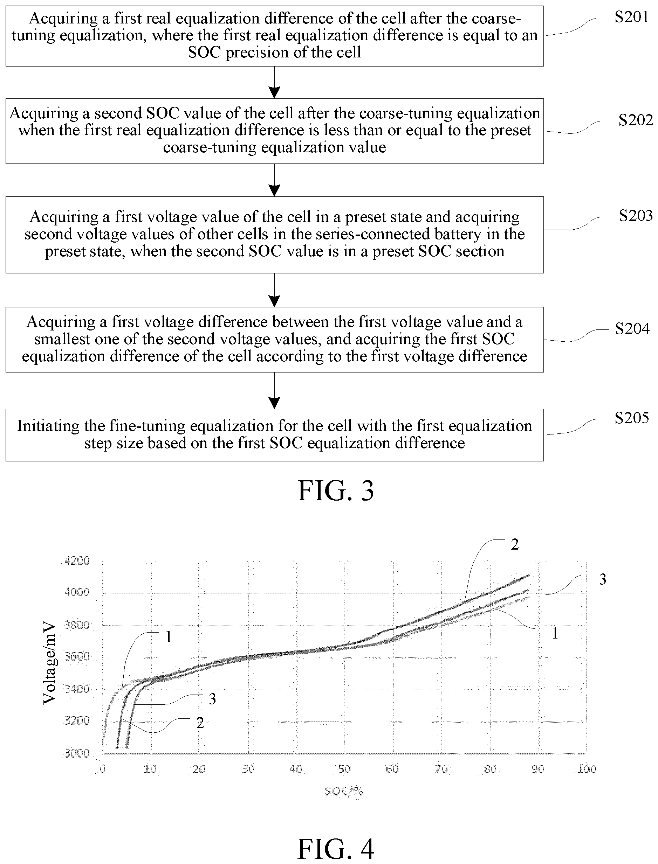

In an embodiment, as shown in FIG. 3, step S20 of determining the first SOC equalization difference according to the first voltage value of the cell after the coarse-tuning equalization is completed when the first real equalization difference of the cell after the coarse-tuning equalization is completed reaches the preset fine-tuning requirement, and initiating fine-tuning equalization for the cell with the first equalization step size based on the first SOC equalization difference includes the following steps.

S201: Acquiring the first real equalization difference of the cell after the coarse-tuning equalization is completed. The first real equalization difference is equal to the SOC precision of the cell.

That is to say, after the coarse-tuning equalization is completed, the first real equalization difference of the cell is the SOC precision of the cell. The SOC precision of each cell is pre-stored in the BMS. Therefore, the first real equalization difference after completion of the coarse-tuning equalization can be learned by directly querying the BMS for the SOC precision of the cell.

It may be understood that, the completion of the coarse-tuning equalization may be determined according to a duration of the coarse-tuning equalization (it is determined whether a specified equalization duration is reached, and if so, it means that the coarse-tuning equalization is completed) or a capacity of the coarse-tuning equalization (it is determined whether a specified equalization capacity is reached, and if so, it means that the coarse-tuning equalization is completed).

S202: Acquiring a second SOC value of the cell after the coarse-tuning equalization is completed when the first real equalization difference is less than or equal to a preset coarse-tuning equalization value. The second SOC value is an SOC value corresponding to the cell after the completion of the coarse-tuning equalization, and the SOC value may be directly acquired from the BMS.

When the first real equalization difference is less than or equal to the preset coarse-tuning equalization value, it means that the equalization has been completed to a maximum degree by means of coarse-tuning equalization (the preset fine-tuning requirement has been reached), and the equalization difference cannot be further reduced by the coarse-tuning equalization. Therefore, fine-tuning equalization is required to further equalize the cell.

S203: Acquiring a first voltage value of the cell in a preset state and acquiring second voltage values of other cells in the series-connected battery in the preset state, when the second SOC value is in a preset SOC section.

The second SOC value being in the preset SOC section means that the second SOC value of the cell after completion of the coarse-tuning equalization falls within a range of the preset SOC section. The preset SOC section may be determined according to an equalization target type of the fine-tuning equalization (including voltage top alignment, voltage bottom alignment, preset voltage alignment, or the like).

The preset state is a current state of the cell that the first voltage value or the second voltage value is required to be collected when the second SOC value is in the preset SOC section. The preset state may be determined according to the equalization target type of the fine-tuning equalization. The preset state includes a full charge state of the cell, an empty state of the cell, and a state in which the voltage of the cell is equal to a preset voltage.

The first voltage value is a voltage value of the cell in the preset state for which the coarse-tuning equalization has been completed. The second voltage values are respective voltage values of other cells in the preset state except the cell for which the coarse-tuning equalization has been completed.

S204: Acquiring a first voltage difference of the cell between the first voltage value of the cell and a smallest one of the second voltage values, and acquiring the first SOC equalization difference of the cell according to the first voltage difference. The first SOC equalization difference represents an SOC difference value after the first voltage difference is converted to a cell capacity.

In an embodiment, an OCV-SOC curve is prestored in the BMS. An SOC equalization difference corresponding to the first voltage difference may be directly obtained by querying the OCV-SOC curve.

In another embodiment, an SOC value corresponding to the first voltage value may be first acquired from the OCV-SOC curve, and a smallest one (that is, a smallest second voltage value) of all of the second voltage values may be determined. Then an SOC value corresponding to the smallest second voltage value is acquired from the OCV-SOC curve, and a difference between the SOC value corresponding to the first voltage value and the SOC value corresponding to the smallest second voltage value is acquired and recorded as the first SOC equalization difference of the cell.

It may be understood that, in some embodiments, the first real equalization difference is equal to the first SOC equalization difference.

S205: Initiating the fine-tuning equalization for the cell with the first equalization step size based on the first SOC equalization difference.

It may be understood that, before initiating the fine-tuning equalization, a first equalization step size (the first equalization step size of the fine-tuning equalization is required to be less than or equal to the first SOC equalization difference) may be first selected from a preset equalization step size list (the equalization step size list lists a plurality of possible equalization step sizes) according to the first SOC equalization difference, and then the fine-tuning equalization is performed according to the selected first equalization step size.

During the above fine-tuning equalization, the equalization is initiated according to the first voltage value of the cell. The equalization precision is correlated with the voltage sampling precision and the OCV curve characteristic of the cell. Therefore, the equalization precision is relatively high, and the error is relatively small. The fine-tuning equalization is adapted to be performed in a case that the equalization difference is relatively small. Each equalization requires one full charge. However, in an actual working condition, a number of full charges is at most one per day. Therefore, an actual number of required days is far more than a total equalization duration (for example, a duration of one fine-tuning equalization is 10 hours, and one fine-tuning equalization requires one full charge, but in actual use, a number of full charges is at most one per day, and therefore at least one day is spent to complete the 10-hour fine-tuning equalization).

In an embodiment, before step S203 of acquiring the first voltage value of the cell in the preset state and acquiring the second voltage values of the other cells in the series-connected battery in the preset state, when the second SOC value is in the preset SOC section, the method includes the following steps.

Acquiring an equalization target type of the fine-tuning equalization.

Determining that the preset SOC section is a high SOC section of a first preset range when the equalization target type of the fine-tuning equalization is voltage top alignment, where the preset state is a full SOC of the cell. It may be understood that, the high SOC section of the first preset range may be set as required, for example, may be set to a high SOC section above 90%.

Determining that the preset SOC section is a low SOC section of a second preset range when the equalization target type of the fine-tuning equalization is voltage bottom alignment, where the preset state is an empty state of the cell. It may be understood that, the low SOC section of the second preset range may be set as required, for example, may be set to a low SOC section below 10%.

Determining that the preset SOC section is an SOC section of a third preset range including an SOC value corresponding to a preset voltage when the equalization target type of the fine-tuning equalization is preset voltage alignment, where the preset state is a state in which a voltage of the cell is equal to the preset voltage. It may be understood that, the SOC section of the third preset range may be set as required, for example, may be set to an SOC section that includes a range of 10% of an SOC value corresponding to the preset voltage (optionally, the SOC value corresponding to the preset voltage is used as a midpoint of the SOC section).

That is to say, in this embodiment, the preset SOC section is determined according to the equalization target type of the fine-tuning equalization (including voltage top alignment, voltage bottom alignment, preset point voltage alignment, or the like). The preset state is determined according to the equalization target type of the fine-tuning equalization. The preset state includes the full SOC of the cell, the empty state of the cell, and the state in which the voltage of the cell is equal to the preset voltage.

By determining the preset SOC section and the preset state above, the precision of the fine-tuning equalization can be further improved. For example, when the equalization target type of the fine-tuning equalization is voltage top alignment, the preset SOC section is determined as the high SOC section of the first preset range, and the voltage value is acquired in the full SOC. In this case, the determined first SOC equalization is relatively small. Therefore, the calculation precision is improved. The same is true for other equalization target types.

In an embodiment, after step S 102 of determining the smallest one of the first SOC values of all of the cells, and acquiring the initial equalization difference of each cell between the first SOC value of the cell and the smallest first SOC value, the method includes:
acquiring a third voltage value of the cell in the preset state and fourth voltage values of other cells in the series-connected battery in the preset state when the initial equalization difference of the cell is less than the preset coarse-tuning equalization value and the first SOC value is in the preset SOC section.

In this embodiment, if the initial equalization difference of the cell is less than the preset coarse-tuning equalization value, it means that the coarse-tuning equalization is no longer applicable to the cell. Instead, the cell directly satisfies the preset fine-tuning requirement. Therefore, the fine-tuning equalization can be directly performed on the cell. The first SOC value being in the preset SOC section means that the first SOC value of the cell acquired from the BMS falls within the range of the preset SOC section. The preset SOC section may be determined according to the equalization target type of the fine-tuning equalization (including voltage top alignment, voltage bottom alignment, preset point voltage alignment, or the like). The preset state is a current state of each cell that the third voltage value or the fourth voltage value required to be collected when the first SOC value is in the preset SOC section. The preset state may be determined according to the equalization target type of the fine-tuning equalization. The preset state includes a full SOC of the cell, an empty state of the cell, and a state in which the voltage of the cell is equal to a preset voltage. The third voltage value is a voltage value of the cell in the preset state before performing equalization. The fourth voltage values are voltage values of other cells except the cell in the preset state before performing equalization.

Acquiring a second voltage difference between the third voltage value and a smallest one of the fourth voltage values, and acquiring a second SOC equalization difference of the cell according to the second voltage difference. The second SOC equalization difference represents an SOC difference value after the second voltage difference is converted to a cell capacity. In an embodiment, an OCV-SOC curve is prestored in the BMS. An SOC equalization difference corresponding to the second voltage difference may be directly obtained by querying the OCV-SOC curve. In another embodiment, an SOC value corresponding to the third voltage value may be first acquired from the OCV-SOC curve, and a smallest one (that is, a smallest fourth voltage value) of all of the fourth voltage values may be determined. Then an SOC value corresponding to the smallest fourth voltage value is acquired from the OCV-SOC curve, and a difference between the SOC value corresponding to the third voltage value and the SOC value corresponding to the smallest fourth voltage value is acquired and recorded as the second SOC equalization difference of the cell.

Initiating fine-tuning equalization for the cell with a second equalization step size based on the second SOC equalization difference. The second equalization step size is less than the second SOC equalization difference. It may be understood that, before the fine-tuning equalization, a second equalization step size (the second equalization step size of the fine-tuning equalization is required to be less than or equal to the second SOC equalization difference) may be first selected from a preset equalization step size list (the equalization step size list lists a plurality of possible equalization step sizes) according to the second SOC equalization difference, and then the fine-tuning equalization is performed according to the selected second equalization step size.

During the fine-tuning equalization, the equalization is initiated according to the third voltage value of the cell, and the equalization precision is correlated with the voltage sampling precision and the OCV curve characteristic of the cell. Therefore, the equalization precision is high and the error is small. The fine-tuning equalization is adapted to be performed in a case that the equalization difference is relatively small. It may be understood that, the second equalization step size may or may not be equal to the first equalization step size.

It may be understood that, if the SOC equalization difference after completion of the current fine-tuning equalization is still greater than the target equalization value, it means that the SOC equalization has not been completed, and the fine-tuning equalization is required to be performed for a second time or more times (for a specific process, refer to subsequent description of the secondary fine-tuning equalization, and details are not described herein again), until a final obtained real equalization difference of the cell is less than or equal to the target equalization value. However, if the SOC equalization difference after completion of the current fine-tuning equalization is less than or equal to the target equalization value, it means that the SOC equalization of the cell has been completed.

In an embodiment, step S30 of determining that SOC equalization of the cell is completed when the second real equalization difference of the cell after the fine-tuning equalization is less than or equal to the target equalization value includes:
acquiring the second real equalization difference of the cell after the fine-tuning equalization, where the second real equalization difference is equal to a difference between the first SOC equalization difference and the first equalization step size; and determining that the SOC equalization of the cell is completed when the second real equalization difference is less than or equal to the target equalization value.

That is to say, after completion of the fine-tuning equalization, the second real equalization difference is equal to a difference between the first SOC equalization difference and the first equalization step size. When the second real equalization difference of the cell is less than or equal to the target equalization value, it means that the SOC equalization of the cell is completed. When the second real equalization difference of the cell is still greater than the target equalization value, it means that the SOC equalization is not completed, and the fine-tuning equalization is required to be performed for a second time (or more times), until a final obtained real equalization difference of the cell is less than or equal to the target equalization value.

In an embodiment, after the acquiring the second real equalization difference of the cell after the fine-tuning equalization, the method further includes the following steps:

Acquiring a third SOC value of the cell after the fine-tuning equalization when the second real equalization difference is greater than the target equalization value. The third SOC value is an SOC value corresponding to the cell after the initial fine-tuning equalization, and the SOC value can be directly acquired from the BMS. It may be understood that, when the second real equalization difference is greater than the target equalization value, it means that the equalization target has not been reached after one fine-tuning equalization, that is to say, the SOC equalization of the cell has not been completed. Therefore, secondary fine-tuning equalization is required.

Acquiring a fifth voltage value of the cell in the preset state and sixth voltage values of the other cells in the series-connected battery in the preset state when the third SOC value is in the preset SOC section. The third SOC value being in the preset SOC section means that the third SOC value corresponding to the cell after the initial fine-tuning equalization falls within the range of the preset SOC section. The preset SOC section may be determined according to the equalization target type of the fine-tuning equalization (including voltage top alignment, voltage bottom alignment, preset voltage alignment, or the like). The preset state is a current state of the cell having the fifth voltage value or the sixth voltage value required to be collected when the third SOC value is in the preset SOC section. The preset state may be determined according to the equalization target type of the fine-tuning equalization. The preset state includes the full SOC of the cell, the empty state of the cell, and the state in which the voltage of the cell is equal to the preset point voltage. The fifth voltage value is a voltage value of the cell in the preset state for which the initial fine-tuning equalization has been previously completed. The sixth voltage values are voltage values of other cells in the preset state except the cell for which the initial fine-tuning equalization has been previously completed.

Acquiring a third voltage difference between the fifth voltage value and a smallest one of the sixth voltage values, and acquiring a third SOC equalization difference of the cell according to the third voltage difference. The third SOC equalization difference represents an SOC difference value after the third voltage difference is converted to a cell capacity. In an embodiment, an OCV-SOC curve is prestored in the BMS. An SOC equalization difference corresponding to the third voltage difference may be directly obtained by querying the OCV-SOC curve. In another embodiment, an SOC value corresponding to the fifth voltage value may be first acquired from the OCV-SOC curve, and a smallest one (that is, a smallest sixth voltage value) of all of the sixth voltage values may be determined. Then an SOC value corresponding to the smallest sixth voltage value is acquired from the OCV-SOC curve, and a difference between the SOC value corresponding to the fifth voltage value and the SOC value corresponding to the smallest sixth voltage value is acquired and recorded as the third SOC equalization difference of the cell. It may be understood that, in some embodiments, the second real equalization difference is equal to the third SOC equalization difference.

Initiating secondary fine-tuning equalization for the cell with a third equalization step size based on the third SOC equalization difference, where the third equalization step size is less than the third SOC equalization difference. It may be understood that, before performing the secondary fine-tuning equalization, the third equalization step size (the third equalization step size of the secondary fine-tuning equalization is required to be less than or equal to the third SOC equalization difference, and the third equalization step size is less than or equal to the first equalization step size of the previous first fine-tuning equalization) may be first selected from the preset equalization step size list (the equalization step size list lists a plurality of possible equalization step sizes) according to the third SOC equalization difference, and then the secondary fine-tuning equalization is performed according to the selected third equalization step size.

During the fine-tuning equalization, the equalization is initiated according to the fifth voltage value of the cell, and the equalization precision is correlated with the voltage sampling precision and the OCV curve characteristic of the cell. Therefore, the equalization precision is high and the error is small. The fine-tuning equalization is adapted to be performed in a case that the equalization difference is relatively small.

It may be understood that, if the SOC equalization difference after the secondary fine-tuning equalization is still greater than the target equalization value, it means that the SOC equalization has not been completed, and the fine-tuning equalization is required to be further performed (which is performed with reference to the secondary fine-tuning equalization process, and details are not described herein again), until a final obtained real equalization difference of the cell is less than or equal to the target equalization value.

In an embodiment, before the initiating secondary fine-tuning equalization for the cell with a third equalization step size based on the third SOC equalization difference, the method further includes the following steps.

Determining whether the third SOC equalization difference is greater than the first equalization step size. That is to say, in this embodiment, before the secondary fine-tuning equalization is performed, the third equalization step size may be selected according to the third SOC equalization difference.

Setting the third equalization step size to be equal to the first equalization step size when the third SOC equalization difference is greater than the first equalization step size. That is to say, when the third SOC equalization difference is greater than the first equalization step size, it means that the second equalization may be performed still according to the first equalization step size selected during the initial fine-tuning equalization. In this case, there is no need to select another third equalization step size. Instead, the third equalization step size is directly set to be equal to the first equalization step size.

Selecting a third equalization step size less than the third SOC equalization difference when the third SOC equalization difference is less than or equal to the first equalization step size. That is to say, when the third SOC equalization difference is less than the first equalization step size, it means that the first equalization step size previously selected during the first fine-tuning equalization is no longer applicable to the secondary fine-tuning equalization process. Therefore, it is necessary to select a third equalization step size less than or equal to the third SOC equalization difference from the preset equalization step size list (since the third SOC equalization difference is less than or equal to the first equalization step size, the third equalization step size is necessarily less than the first equalization step size). Then the secondary fine-tuning equalization is performed according to the selected third equalization step size.

In an embodiment, the initiating coarse-tuning equalization for the cell includes: acquiring a state of health (SOH) value and a nominal cell capacity of the cell; determining an equalization capacity of the cell according to the initial equalization difference, the SOH value, and the nominal cell capacity of the cell; and initiating coarse-tuning equalization for a capacity of the cell, and completing the coarse-tuning equalization when the capacity of the cell after the completion of the coarse-tuning equalization reaches the equalization capacity.

That is to say, in this embodiment, the initial equalization difference is calculated based on the SOC value of the cell, the equalization capacity is determined according to the initial equalization difference, the SOH value, and the nominal cell capacity, and then it is determined according to the equalization capacity whether the coarse-tuning equalization process is completed. The coarse-tuning equalization process is applicable to a full SOC range. However, a precision of the process is correlated with the precisions of the SOC value and the SOH algorithm. Therefore, the equalization error is relatively large. The coarse-tuning equalization is adapted to be performed in a case that the equalization difference is relatively large.

In an embodiment, the initiating coarse-tuning equalization for the cell includes: acquiring an SOH value, a nominal cell capacity, and an effective equalization current of the cell; determining a first equalization duration of the cell according to the initial equalization difference, the SOH value, the nominal cell capacity, and the effective equalization current of the cell; and initiating coarse tuning equalization for the cell, and completing the coarse-tuning equalization when a duration of the coarse-tuning equalization of the cell reaches the first equalization duration.

That is to say, in this embodiment, the initial equalization difference is calculated based on the SOC value of the cell, the first equalization duration is determined according to the initial equalization difference, the SOH value, the nominal cell capacity, and the effective equalization current, and then it is determined according to the first equalization duration whether the coarse-tuning equalization process is completed. The coarse-tuning equalization process is applicable to a full SOC range. However, a precision of the process is correlated with the precisions of the SOC value and the SOH algorithm. Therefore, the equalization error is relatively large. The coarse-tuning equalization is only adapted to be performed in a case that the equalization difference is relatively large.

In an embodiment, the initiating the fine-tuning equalization for the cell with the first equalization step size based on the first SOC equalization difference includes: acquiring a nominal cell capacity and an effective equalization current of the cell; determining a second equalization duration of the cell according to the first equalization step size, the nominal cell capacity, and the effective equalization current; and initiating fine-tuning equalization of the cell, and completing the current fine-tuning equalization when a duration of the fine-tuning equalization of the cell reaches the second equalization duration.

That is to say, in this embodiment, the second equalization duration is determined based on the first equalization step size, the nominal cell capacity, and the effective equalization current of the cell, and then it is determined according to the second equalization duration whether the fine-tuning equalization process is completed. The fine-tuning equalization precision is correlated with the voltage sampling precision and the OCV curve characteristic of the cell. Therefore, the equalization precision is high and the error is small. The fine-tuning equalization is adapted to be performed in a case that the equalization difference is relatively small. Similarly, during other fine-tuning equalization (such as the secondary fine-tuning equalization), the equalization duration may be calculated with reference to this embodiment. In this way, it can be determined that the fine-tuning equalization ends when the equalization duration ends.

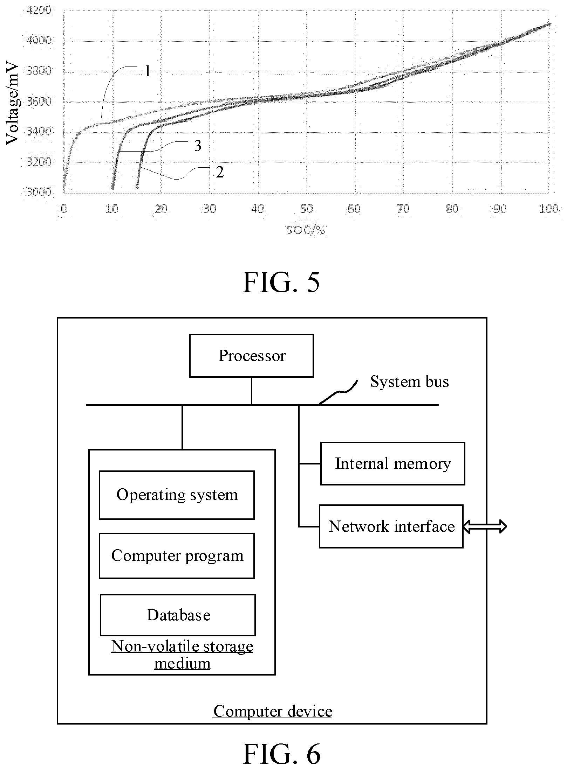

As shown in FIG. 4 and FIG. 5, FIG. 4 is a schematic diagram of a voltage curve of each cell in a series-connected battery before performing SOC equalization according to an embodiment of the present disclosure, and FIG. 5 is a schematic diagram of a voltage curve of each cell in the series-connected battery after completion of the SOC equalization according to an embodiment of the present disclosure. In the figures, 1, 2, and 3 respectively represent a cell in the series-connected battery. Obviously, before the SOC equalization is performed, remaining capacities of all of the cells in the series-connected battery are different, resulting in misalignment of the remaining capacities. As a result, an available capacity of the series-connected battery decreases. After the SOC equalization is completed, no capacity misalignment exists between the cells, and the available capacity of the series-connected battery is improved compared with that before the equalization.

In order to facilitate the understanding of this solution, the following examples are provided to illustrate the present disclosure:

An initial equalization difference of a cell in the series-connected battery is 8%, an SOC precision of the cell is ±3% (NCM), an SOH value is 100%, a preset coarse-tuning equalization value is 5%, a nominal cell capacity is 200 Ah, an effective equalization current is 0.1 A, and a target equalization value is 0.5%.

It can be learned from the above that when the initial equalization difference of the above cell reaches the preset coarse-tuning requirement (the initial equalization difference of 8% is greater than the preset coarse-tuning equalization value of 5%), the coarse-tuning equalization of the cell may be initiated. Moreover, if it is determined according to the equalization capacity whether the above coarse-tuning equalization is completed, the equalization capacity is 8%^{∗}100%^{∗}200 Ah=16 Ah. If it is determined according to the first equalization duration whether the coarse-tuning equalization process is completed, the first equalization duration is 16 Ah/0.1 A=160 h. The above coarse-tuning equalization process can be performed without waiting for full charge (since the first SOC value of the cell used to calculate the initial equalization difference can be directly acquired at any time from the BMS, full charge is not required in the process) or other specific working conditions, and therefore is applicable to a wide range. After the above coarse-tuning equalization is completed, it is learned that the first real equalization difference of the cell is equal to an absolute value of the SOC precision of the cell, that is, 3% (the SOC equalization difference).

Since the first real equalization difference reaches the preset fine-tuning requirement (the first real equalization difference of 3% is less than the preset coarse-tuning equalization value of 5%), if it is learned that the equalization target type of the fine-tuning equalization of the series-connected battery is voltage top alignment, it may be determined that the preset SOC section is a high SOC section above 90%, and the preset state is a full SOC of the cell. When the second SOC value is in the preset SOC section, the first voltage value of the cell in the preset state and the second voltage values of the other cells in the series-connected battery in the preset state are acquired from the BMS, the first voltage difference between the first voltage value and the smallest second voltage value is acquired, and the first SOC equalization difference of the cell is determined as 3% from the OCV-SOC curve according to the first voltage difference.

Then the equalization is initiated according to the preset first equalization step size of 1%. In this case, the second equalization duration of the fine-tuning equalization process is 1%^{∗}200 Ah/0.1 A=20 h. In addition, the process requires one full charge to be completed (since the preset state is the full SOC, the first voltage value and the second voltage value are required to be acquired in the full SOC). After the above fine-tuning equalization is completed, the acquired second real equalization difference of the cell is equal to a difference between the first SOC equalization difference of 3% and the first equalization step size of 1%, that is, 2% (the SOC equalization difference).

Since the second real equalization difference of 2% is greater than the target equalization value of 0.5% (and is much less than the preset coarse-tuning equalization value of 5% compared with the first real equalization difference), the secondary fine-tuning equalization is required to be initiated. Further, when the third SOC value is in the preset SOC section, the fifth voltage value of the cell in the preset state and the sixth voltage values of the other cells in the series-connected battery in the preset state are acquired from the BMS, the third voltage difference between the fifth voltage value and the smallest sixth voltage value is acquired, and the third SOC equalization difference of the cell is determined as 2% from the OCV-SOC curve according to the third voltage difference.

Since the third SOC equalization difference is greater than the first equalization step size of 1%, the equalization is initiated still according to the third equalization step size of 1% equal to the first equalization step size. In this case, the equalization duration of the fine-tuning equalization process is 1%^{∗}200 Ah/0.1 A=20 h. In addition, the process requires one full charge to be completed (since the preset state is the full SOC, the fifth voltage value and the sixth voltage value are required to be acquired in the full SOC). After the above secondary fine-tuning equalization is completed, the obtained SOC equalization difference of the cell is equal to a difference between the third SOC equalization difference of 2% and the third equalization step size of 1%, that is, 1% (the SOC equalization difference).

In this case, since the SOC equalization difference of the cell after completion of the secondary fine-tuning equalization is 1%, which is greater than the target equalization value of 0.5% (and is much less than the preset coarse-tuning equalization value of 5% compared with the second real equalization difference), the fine-tuning equalization is required to be further performed. In this case, the SOC equalization difference of the cell after the secondary fine-tuning equalization is calculated as 1% by using the method for calculating the SOC equalization difference by using the voltage difference in the high SOC section in the above fine-tuning equalization and secondary fine-tuning equalization processes, and the SOC equalization difference is equal to the third equalization step size of 1%. Therefore, a fourth equalization step size less than the third equalization step size of 1% is required to be selected from the preset equalization step size list.

In this example, after the fourth equalization step size of 0.5% is selected, the fine-tuning equalization is initiated again. In this case, the equalization duration of the fine-tuning equalization process is 0.5%^{∗}200 Ah/0.1 A=10 h, and the process requires one full charge to be completed (since the preset state is the full SOC). After the above another fine-tuning equalization is completed, the obtained SOC equalization difference of the cell is equal to a difference between the SOC equalization difference of 1% after the secondary fine-tuning and the fourth equalization step size of 0.5%, that is, 0.5% (the SOC equalization difference). In this case, since the SOC equalization difference is equal to the target equalization value of 0.5%, it is determined that the SOC equalization of the cell is completed.

In the above equalization process of the cell, a total equalization time is 210 h, and a number of full charges is 3 (corresponding to the three fine-tuning equalization processes). That is to say, 9 days are spent to complete the above process.

It may be understood that, in the above example, when the initial equalization difference is greater than the target equalization value, the coarse-tuning equalization is first performed to reduce the SOC equalization difference to the first real equalization difference of 3% (a limit of the coarse-tuning equalization is the first real equalization difference, and therefore, the target equalization value cannot be achieved by only the coarse-tuning equalization, but since the coarse-tuning equalization can be performed in any working condition without a need to wait for a specific working condition, the actual total duration that is spent can be reduced, and the coarse-tuning equalization is adapted to be performed in a case that the equalization difference is relatively large). Then the fine-tuning equalization is performed. During the fine-tuning equalization, a fixed equalization step size is not selected at the beginning. Instead, the larger first equalization step size of 1% is first selected for equalization. In this way, the number of times of fine-tuning equalization can be reduced (since the fine-tuning equalization in the above example is required to be performed in the full SOC, each fine-tuning equalization requires a full charge, which spends at least one day, and when a duration of the fine-tuning equalization is less than one day, a number of days required for the fine-tuning equalization is required to be minimized, and the first equalization step size is required to be selected according to the principle). When the SOC equalization difference after the secondary fine-tuning equalization is equal to 1%, the fourth equalization step size of 0.5% less than the 1% is used to finally achieve the target equalization value. By means of the combination of the coarse-tuning equalization and the fine-tuning equalization, the present disclosure shortens the total equalization duration that is spent.

In an embodiment, a computer device is provided. The computer device may be a server, and an internal structure diagram thereof may be shown in FIG. 6. The computer device includes a processor, a memory, a network interface, and a database connected by using a system bus. The processor of the computer device is configured to provide computing and control capabilities. The memory of the computer device includes a non-volatile storage medium and an internal memory. The non-volatile storage medium stores an operating system, computer-readable instructions, and a database. The internal memory provides an environment for execution of the operating system and the computer-readable instructions in the non-volatile storage medium. When the computer-readable instructions are executed by the processor, a step-varying equalization method for a series-connected battery is performed.

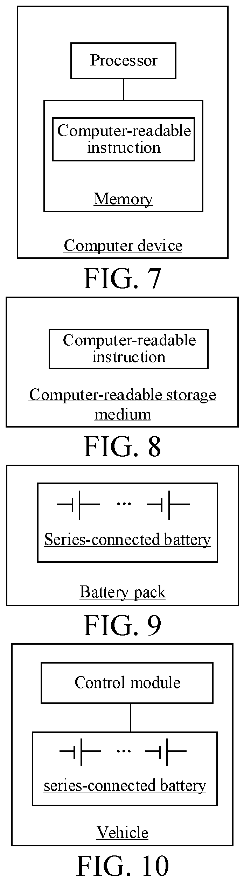

In an embodiment, a computer device is provided. An internal structural diagram of the computer device may be that shown in FIG. 7. The computer device includes a memory, a processor, and computer-readable instructions stored in the memory and executable on the processor. When executing the computer-readable instructions, the processor performs the above step-varying equalization method for a series-connected battery.

In an embodiment, a computer-readable storage medium is further provided. Referring to FIG. 8, the computer-readable storage medium stores computer-readable instructions. When the computer-readable instructions are executed by a processor, the above step-varying equalization method for a series-connected battery is performed.

In an embodiment, a battery pack is further provided. Referring to FIG. 9, the battery pack includes a series-connected battery. SOC equalization of the cell in the battery pack is performed by using the step-varying equalization method for a series-connected battery. For specific definition of the above series-connected battery, refer to the above definition in the step-varying equalization method for a series-connected battery. Details are not described herein again.

In an embodiment, a vehicle is further provided. Referring to FIG. 10, the vehicle includes a series-connected battery and a control module communicatively connected to the series-connected battery. The control module is configured to perform the step-varying equalization method for a series-connected battery.

For specific definition of the control module, refer to the above definition in the step-varying equalization method for a series-connected battery. Details are not described herein again. All or a part of modules in the control module may be implemented by software, hardware, or a combination thereof. The foregoing modules may be built in or independent of a processor of a computer device in a hardware form, or may be stored in a memory of the computer device in a software form, so that the processor invokes and performs an operation corresponding to each of the foregoing modules.

A person of ordinary skill in the art may understand that all or some of the procedures of the methods of the foregoing embodiments may be implemented by computer-readable instructions instructing relevant hardware. The computer-readable instructions may be stored in a non-volatile computer-readable storage medium. When the computer-readable instructions are executed, the procedures of the embodiments of the foregoing methods may be included. Any reference to the memory, the storage, the database, or other media used in the embodiments of the present disclosure may include a non-volatile memory or a volatile memory. The non-volatile memory may include a read-only memory (ROM), a programmable ROM (PROM), an electrically programmable ROM (EPROM), an electrically erasable programmable ROM (EEPROM), or a flash. The volatile memory may include a random access memory (RAM) or an external cache memory. By way of illustration rather than limitation, the RAM is available in a plurality of forms, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a Rambus dynamic RAM (RDRAM), a direct Rambus dynamic RAM (DRDRAM), or a Rambus dynamic RAM (RDRAM)

A person skilled in the art may clearly understand that, for convenient and concise description, the above functional modules are only described for exemplary purposes. In actual applications, the above functions may be allocated to different functional modules as required, which means that the internal structure of the apparatus is divided into different functional modules to complete all or some of the above described functions.

The above embodiments are merely intended to describe the technical solutions of the present invention and are not to limit the present disclosure. Although the present disclosure is described in detail with reference to the above embodiments, it is to be understood by a person skilled in the art that they may still make modifications to the technical solutions described in the above embodiments or make equivalent replacements to some technical features therein. The modifications or the replacements do not cause the essence of the corresponding technical solutions to depart from the spirit and the scope of the technical solutions of the embodiments of the present disclosure, and all fall within the protection scope of the present disclosure.

## Claims

1. A step-varying equalization method for a series-connected battery, comprising:
initiating coarse-tuning equalization for a cell in the series-connected battery when an initial equalization difference of the cell reaches a preset coarse-tuning requirement, wherein the initial equalization difference is determined according to a first state of charge (SOC) value of each cell in the series-connected battery;
determining a first SOC equalization difference according to a first voltage value of the cell after completion of the coarse-tuning equalization when a first real equalization difference of the cell after the completion of the coarse-tuning equalization reaches a preset fine-tuning requirement, and initiating fine-tuning equalization for the cell with a first equalization step size based on the first SOC equalization difference, wherein the first equalization step size is less than the first SOC equalization difference; and
determining that SOC equalization of the cell is completed when a second real equalization difference of the cell after completion of the fine-tuning equalization is less than or equal to a target equalization value.

2. The step-varying equalization method for the series-connected battery according to claim 1, wherein the determining a first SOC equalization difference according to a first voltage value of the cell after the completion of the coarse-tuning equalization when a first real equalization difference of the cell after the completion of the coarse-tuning equalization reaches a preset fine-tuning requirement, and initiating fine-tuning equalization for the cell with a first equalization step size based on the first SOC equalization difference comprises:
acquiring the first real equalization difference of the cell after the completion of the coarse-tuning equalization, wherein the first real equalization difference is equal to an SOC precision of the cell;
acquiring a second SOC value of the cell after the completion of the coarse-tuning equalization when the first real equalization difference is less than or equal to a preset coarse-tuning equalization value;
acquiring the first voltage value of the cell in a preset state and acquiring second voltage values of other cells in the series-connected battery in the preset state, when the second SOC value is in a preset SOC section;
acquiring a first voltage difference of the cell between the first voltage value of the cell and a smallest one of the second voltage values, and acquiring the first SOC equalization difference of the cell according to the first voltage difference; and
initiating the fine-tuning equalization for the cell with the first equalization step size based on the first SOC equalization difference.

3. The step-varying equalization method for the series-connected battery according to claim 2, wherein before the acquiring a first voltage value of the cell in a preset state and acquiring second voltage values of other cells in the series-connected battery in the preset state, when the second SOC value is in a preset SOC section, the method further comprises:
acquiring an equalization target type of the fine-tuning equalization; and
determining that the preset SOC section is a high SOC section of a first preset range when the equalization target type of the fine-tuning equalization is voltage top alignment, wherein the preset state is a full SOC of the cell;
determining that the preset SOC section is a low SOC section of a second preset range when the equalization target type of the fine-tuning equalization is voltage bottom alignment, wherein the preset state is an empty state of the cell; or
determining that the preset SOC section is an SOC section of a third preset range comprising an SOC value corresponding to a preset voltage when the equalization target type of the fine-tuning equalization is preset voltage alignment, wherein the preset state is a state in which a voltage of the cell is equal to the preset voltage.

4. The step-varying equalization method for the series-connected battery according to claim 1, wherein the initiating coarse-tuning equalization for a cell in the series-connected battery when an initial equalization difference of the cell reaches a preset coarse-tuning requirement comprises:
acquiring the first SOC value of each cell in the series-connected battery;
determining a smallest one of the first SOC values of all of the cells, and acquiring the initial equalization difference of the cell between the first SOC value of the cell and the smallest first SOC value; and
initiating the coarse-tuning equalization for the cell when the initial equalization difference of the cell is greater than or equal to a preset coarse-tuning equalization value.

5. The step-varying equalization method for the series-connected battery according to claim 4, wherein the determining a smallest first SOC value of the first SOC values of all of the cells in the series-connected battery, and for each cell, acquiring the initial equalization difference of the cell between the first SOC value of the cell and the smallest first SOC value comprises:
acquiring a third voltage value of the cell in the preset state and fourth voltage values of other cells in the series-connected battery in the preset state when the initial equalization difference of the cell is less than the preset coarse-tuning equalization value and the first SOC value is in the preset SOC section;
acquiring a second voltage difference between the third voltage value and a smallest one of the fourth voltage values, and acquiring a second SOC equalization difference of the cell according to the second voltage difference; and
initiating the fine-tuning equalization for the cell with a second equalization step size based on the second SOC equalization difference, wherein the second equalization step size is less than the second SOC equalization difference.

6. The step-varying equalization method for the series-connected battery according to claim 1, wherein
the determining that SOC equalization of the cell is completed when a second real equalization difference of the cell after the completion of the fine-tuning equalization is less than or equal to a target equalization value comprises:
acquiring the second real equalization difference of the cell after the completion of the fine-tuning equalization, wherein the second real equalization difference is equal to a difference between the first SOC equalization difference and the first equalization step size; and
determining that the SOC equalization of the cell is completed when the second real equalization difference is less than or equal to the target equalization value.

7. The step-varying equalization method for the series-connected battery according to claim 6, wherein after the acquiring the second real equalization difference of the cell after the completion of the fine-tuning equalization, the method further comprises:
acquiring a third SOC value of the cell after the fine-tuning equalization when the second real equalization difference is greater than the target equalization value;
acquiring a fifth voltage value of the cell in the preset state and sixth voltage values of other cells in the series-connected battery in the preset state when the third SOC value is in the preset SOC section;
acquiring a third voltage difference between the fifth voltage value and a smallest one of the sixth voltage values, and acquiring a third SOC equalization difference of the cell according to the third voltage difference; and
initiating secondary fine-tuning equalization for the cell with a third equalization step size based on the third SOC equalization difference, wherein the third equalization step size is less than the third SOC equalization difference.

8. The step-varying equalization method for the series-connected battery according to claim 7, wherein before the initiating secondary fine-tuning equalization for the cell with a third equalization step size based on the third SOC equalization difference, the method comprises:
determining whether the third SOC equalization difference is greater than the first equalization step size; and
setting the third equalization step size to be equal to the first equalization step size when the third SOC equalization difference is greater than the first equalization step size; or selecting a third equalization step size less than the third SOC equalization difference when the third SOC equalization difference is less than or equal to the first equalization step size.

9. The step-varying equalization method for the series-connected battery according to claim 1, wherein the initiating coarse-tuning equalization for the cell comprises:
acquiring a state of health (SOH) value and a nominal cell capacity of the cell;
determining an equalization capacity of the cell according to the initial equalization difference, the SOH value, and the nominal cell capacity of the cell; and
initiating the coarse-tuning equalization for a capacity of the cell, and completing the coarse-tuning equalization when the capacity of the cell after the coarse-tuning equalization reaches the equalization capacity.

10. The step-varying equalization method for the series-connected battery according to claim 1, wherein the initiating coarse-tuning equalization for the cell comprises:
acquiring a state of health (SOH) value, a nominal cell capacity, and an effective equalization current of the cell;
determining a first equalization duration of the cell according to the initial equalization difference, the SOH value, the nominal cell capacity, and the effective equalization current of the cell; and
initiating the coarse-tuning equalization for the cell, and completing the coarse-tuning equalization when a duration of the coarse-tuning equalization of the cell reaches the first equalization duration.

11. The step-varying equalization method for the series-connected battery according to claim 1, wherein the initiating fine-tuning equalization for the cell with a first equalization step size based on the first SOC equalization difference comprises:
acquiring a nominal cell capacity and an effective equalization current of the cell;
determining a second equalization duration of the cell according to the first equalization step size, the nominal cell capacity, and the effective equalization current; and
initiating the fine-tuning equalization of the cell, and completing the fine-tuning equalization when a duration of the fine-tuning equalization of the cell reaches the second equalization duration.

12. A computer device, comprising a memory, a processor, and computer-readable instructions stored in the memory and executable on the processor, wherein when executing the computer-readable instructions, the processor performs the step-varying equalization method for the series-connected battery according to any of claims 1 to 11.

13. A computer-readable storage medium, storing computer-readable instructions, wherein when the computer-readable instructions are executed by a processor, the step-varying equalization method for the series-connected battery according to any of claims 1 to 11 is performed.

14. A battery pack, comprising a series-connected battery, wherein SOC equalization of a cell in the series-connected battery is performed by using the step-varying equalization method for the series-connected battery according to any of claims 1 to 11.

15. A vehicle, comprising a series-connected battery and a control module communicatively connected to the series-connected battery, wherein the control module is configured to perform the step-varying equalization method for the series-connected battery according to any of claims 1 to 11.
